(19) Europäisches Patentamt
European Patent Office
Office européen des brevets

(11) EP 0 686 652 B1

(12) EUROPÄISCHE PATENTSCHRIFT

(45) Veröffentlichungstag und Bekanntmachung des Hinweises auf die Patenterteilung:
**11.09.1996 Patentblatt 1996/37**

(51) Int Cl.[6]: **C08F 283/12**

(21) Anmeldenummer: **95108829.3**

(22) Anmeldetag: **08.06.1995**

# (54) Radikalisch vernetzbare Alkenylethersiloxanmassen

Radically curable alkenylether siloxane compositions

Compositions d'alcényléthersiloxane réticulables par radicaux

(84) Benannte Vertragsstaaten:
**AT BE CH DE ES FR GB IT LI NL SE**

(30) Priorität: **08.06.1994 DE 4420062**

(43) Veröffentlichungstag der Anmeldung:
**13.12.1995 Patentblatt 1995/50**

(73) Patentinhaber: **Wacker-Chemie GmbH**
**D-81737 München (DE)**

(72) Erfinder:
- **Herzig, Christian, Dr.**
  **D-83373 Taching am See (DE)**
- **Deubzer, Bernwald, Dr.**
  **D-84489 Burghausen (DE)**
- **Blöchl, Martina**
  **D-84375 Tann (DE)**
- **Huettner, David, Dr.**
  **Tecumseh, MI 49286 (US)**
- **Magee, Walter, Dr.**
  **Adrian, MI 49221 (US)**

(74) Vertreter: **Deffner-Lehner, Maria et al**
**Wacker-Chemie GmbH,**
**Hanns-Seidel-Platz 4**
**81737 München (DE)**

(56) Entgegenhaltungen:
**EP-A- 0 273 448**
**EP-A- 0 578 087**
**WO-A-93/22368**
**WO-A-93/22369**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 686 652 B1

## Beschreibung

Die Erfindung betrifft Alkenylethersiloxanmassen sowie ein Verfahren zur radikalischen Vernetzung dieser Massen.

Vinylethergruppen aufweisende Organopolysiloxane und deren Härtung unter UV-Bestrahlung oder im Elektronenstrahl, insbesondere unter Zusatz von kationisch wirksamen Oniuminitiatoren sind bereits seit längerem bekannt. Hierzu sei beispielsweise auf EP 105 341 B (General Electric Co.; ausgegeben am 7. Januar 1987), US 5,145,915 A (Th. Goldschmidt AG; ausgegeben am 8. September 1992) bzw. der entsprechenden EP 449 050 A, US 5,057,549 A und US 5,118,772 A (Wacker-Chemie GmbH; ausgegeben am 15. Oktober 1991 und am 2. Juni 1992) bzw. der entsprechenden EP 396 130 A, US 5,231,157 A (Wacker-Chemie GmbH; ausgegeben am 27. Juli 1994) bzw. der entsprechenden EP 439 777 A, WO 93/22368 (Wacker-Chemie GmbH; ausgegeben am 11. November 1993) und WO 93/22369 (Wacker-Chemie GmbH; ausgegeben am 11. November 1993) verwiesen.

Des weiteren werden in EP 322 808 (PPG Industries, Inc.; ausgegeben am 5. Juli 1989) Massen beschrieben, die unter UV-Bestrahlung aushärten und aus einer ungesättigten Polyesterkomponente sowie aus einer Vinyletherkomponente mit mindestens zwei Vinylethergruppen bestehen. Bei der Behandlung der Vinyletherkomponente allein unter UV mit Initiator und im Elektronenstrahl ohne Initiator bleibt jeweils die Vinyletherkomponente unverändert. Eine Härtung ohne Zusatz der Polyesterkomponente ist unter obigen Bedingungen nicht möglich.

Gegenstand der Erfindung sind Alkenylethersiloxanmassen enthaltend

(A) oligomere oder polymere Organosiliciumverbindung mit durchschnittlich mehr als einer Alkenyloxygruppe der Formel

$$R^2\text{-CH=CH-O-} \qquad \text{(VI)},$$

wobei $R^2$ Wasserstoffatom oder Methylrest bedeutet,

(B) monomere Malein- und/oder Fumarsäureverbindung der Formel

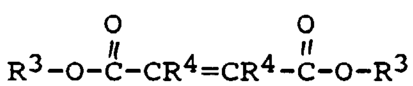

(VII)

oder

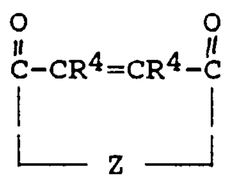

(VIII),

wobei

- $R^3$ gleich oder verschieden sein kann und Wasserstoffatom, Kohlenwasserstoffrest mit 1 bis 16 Kohlenstoffatomen, der durch Sauerstoff, Schwefel, sauerstoff- oder siliciumhaltige Einheiten unterbrochen sein kann, substituierter Kohlenwasserstoffrest mit 1 bis 6 Kohlenstoffatomen, Silylrest oder Siloxanylrest bedeutet,
- $R^4$ gleich oder verschieden sein kann und Wasserstoffatom, Chlor, Brom, Fluor oder gegebenenfalls substituierter Alkylrest bedeutet und
- Z gleich Sauerstoffatom oder ein Rest $-NR^5-$ mit $R^5$ gleich einer für $R^3$ angegebenen Bedeutung ist,

gegebenenfalls

(C) Radikale bildende Initiatoren und gegebenenfalls

(D) Inhibitoren zur Regelung der Topfzeit.

Bei den erfindungsgemäß eingesetzten Organosiliciumverbindungen (A) handelt es sich um beliebige, bisher bekannte Organosiliciumverbindungen mit mindestens zwei Siliciumatomen und durchschnittlich mehr als einer Alkenyloxygruppe der Formel (VI).

Vorzugsweise ist bei den erfindungsgemäß eingesetzten Organosiliciumverbindungen (A) die Gruppierung der Formel (VI) über eine SiC-Verknüpfung an das Siliciumatom geknüpft. Im Fall von Rest $R^2$ in Formel (VI) gleich Methylrest kann es sich sowohl um den cis-1-Propylenoxyrest wie auch um den trans-1-Propylenoxyrest handeln.

Bevorzugt handelt es sich bei den erfindungsgemäß eingesetzten Organosiliciumverbindungen (A) um solche mit durchschnittlich mehr als einer Alkenyloxygruppe gemäß der eingangs zitierten EP 105 341 B, EP 396 130 A, EP 449

050 A, EP 439 777 A, WO 93/22368 und WO 93/22369.

Besonders bevorzugt handelt es sich bei den erfindungsgemäß eingesetzten Organosiliciumverbindungen (A) um durchschnittlich mehr als eine Vinyloxygruppe aufweisende Siloxancopolymere gemäß WO 93/22368 enthaltend

(a) Siloxaneinheiten der Formel

$$R_aSi(OR^1)_bO_{\frac{4-a-b}{2}} \quad (I),$$

wobei

- R gleiche oder verschiedene, gegebenfalls halogenierte Kohlenwasserstoffreste mit 1 bis 18 Kohlenstoffatomen je Rest bedeutet,
- $R^1$ gleiche oder verschiedene Alkylreste mit 1 bis 4 Kohlenstoffatomen je Rest, die durch ein Ethersauerstoffatom substituiert sein können, bedeutet,
- a 0, 1, 2 oder 3,
- b 0, 1, 2 oder 3

und die Summe a+b nicht größer als 3 ist,

(b) je Molekül mindestens zwei Einheiten ausgewählt aus der Gruppe von Einheiten der Formeln

$$GR_cSiO_{\frac{4-(c+1)}{2}} \quad (II),$$

$$O_{\frac{4-(c+1)}{2}}R_cSi\text{-}G^1\text{-}SiR_cO_{\frac{4-(c+1)}{2}} \quad (III),$$

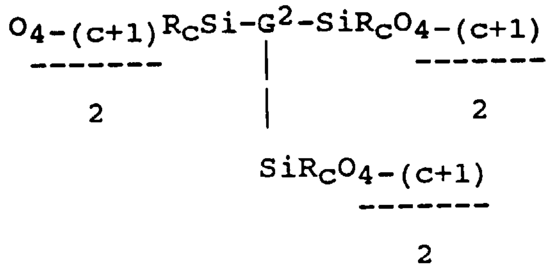

(IV),

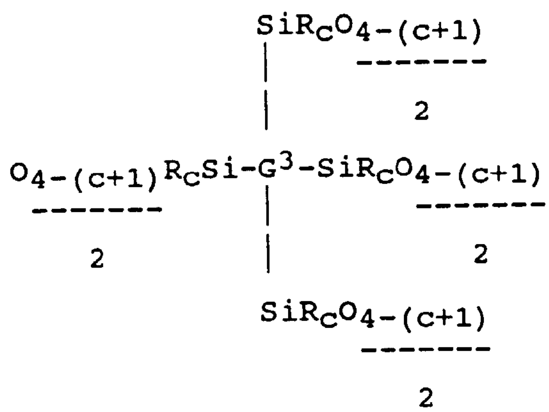

(V),

wobei

- R die oben dafür angegebene Bedeutung hat,
- c 0, 1 oder 2 ist,
- G einen Rest der Formel

$$- CH_2CH_2OY(OCH{=}CH_2)_{x-1}$$

bedeutet, wobei

Y einen zweiwertigen, dreiwertigen, vierwertigen, fünfwertigen oder sechswertigen Kohlenwasserstoffrest mit 2 bis 20 Kohlenstoffatomen je Rest bedeutet, der durch Gruppen der Formel

- OH,
- $OR^2$ (wobei $R^2$ einen Alkylrest mit 1 bis 6 Kohlenstoffatomen je Rest bedeutet),
- $OSiR^3_3$ (wobei $R^3$ einen Methyl-, Ethyl-, Isopropyl-, tert.-Butyl- oder Phenylrest bedeutet),
- 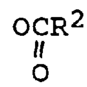

  (wobei $R^2$ die oben dafür angegebene Bedeutung hat) oder
- X (wobei X ein Halogenatom bedeutet)

substituiert sein kann
oder durch mindestens ein Sauerstoffatom, eine Carboxyl- oder eine Carbonylgruppe unterbrochen sein kann, und

x 2, 3, 4, 5 oder 6 ist,

$G^1$ einen Rest der Formel

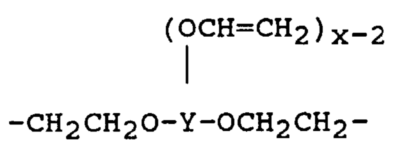

,

$G^2$ einen Rest der Formel

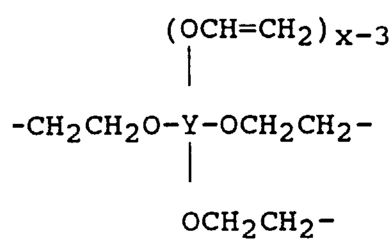

und

$G^3$ einen Rest der Formel

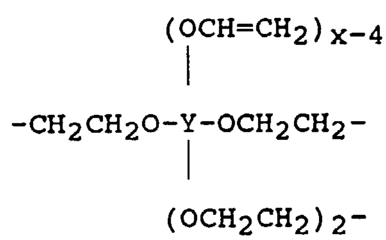

und

bedeutet, wobei Y und x die oben dafür angegebene Bedeutung haben.

Beispiele für die erfindungsgemäß eingesetzten Organosiliciumverbindungen (A) sind Copolymere aus 3-(2-Vinyloxyethoxy)propylmethylsiloxy-, Dimethylsiloxy- und Trimethylsiloxyeinheiten, Copolymere aus 3-(2-Vinyloxyethoxy) propyldimethylsiloxy- und Dimethylsiloxyeinheiten, Copolymere aus Prop-1-enoxypropyl-dimethylsiloxy-, Prop-1-enoxypropylmethylsiloxy- und Dimethylsiloxyeinheiten, Umsetzungsprodukte von Triethylenglycoldivinylether mit

Copolymerisaten aus Hydrogenmethylsiloxy-, Dimethylsiloxy- und Trimethylsiloxyeinheiten (nach WO 93/22368), Umsetzungsprodukte von Butandiolvinylether mit Copolymerisaten aus Hydrogenmethylsiloxy- und Trimethylsiloxyeinheiten sowie Umsetzungsprodukte von Poly-THF-divinylether 290 mit Copolymerisaten von Hydrogenmethylsiloxy-, Hydrogendimethylsiloxy- und Dimethylsiloxyeinheiten (nach WO 93/22368).

Insbesondere handelt es sich bei den erfindungsgemäß eingesetzten Organosiliciumverbindungen (A) um Produktgemische, die entsprechend der Anmeldung WO 93/22368 hergestellt werden.

Die erfindungsgemäß eingesetzten Organosiliciumverbindungen (A) können, wie auch in den oben genannten Veröffentlichungen beschrieben, nach allgemein bekannten Verfahren hergestellt werden, wie etwa durch Hydrosilylierung von Allylvinylethern gemäß EP 105 341 B, Hydrosilylierung von Allylethern mit mehreren Allylgruppen und anschließender Isomerisierung der restlichen Allyloxy- zu Prop-1-enyloxyfunktionen gemäß EP 396 130 A oder durch Reaktion von mehr als zwei Vinyloxygruppen aufweisende organische Verbindung mit Organosiliciumverbindung mit mindestens einem Si-gebundenen Wasserstoffatom je Molekül in Gegenwart von Hydrosilylierungskatalysator.

Die Viskosität der erfindungsgemäß eingesetzten Organosiliciumverbindung (A) beträgt vorzugsweise 10 bis 50 000 $mm^2/s$ bei 25°C, besonders bevorzugt 50 bis 5 000 $mm^2/s$.

Die Anzahl der Reste der Formel (VI) pro kg erfindungsgemäß eingesetzter Organosiliciumverbindung (A) beträgt vorzugsweise 0,1 bis 3 Molequivalent, wobei der Bereich 0,5 bis 2 Molequivalent/kg Verbindung (A) besonders bevorzugt ist.

Die erfindungsgemäßen Organosiliciumverbindungen (A) enthalten vorzugsweise durchschnittlich mehr als 1,3 Alkenyloxygruppen der Formel (VI). Dabei kann Komponente (A) auch oligomere oder polymere Organosiliciumverbindungen enthalten, die nur einem Rest $R^2$-CH=CH-O- oder auch keinen dieser Reste aufweisen.

Die erfindungsgemäßen Organosiliciumverbindungen (A) sind vorzugsweise vollständig mischbar mit der Komponente (B).

Bei der erfindungsgemäß eingesetzten Organosiliciumverbindung (A) kann es sich um eine einzelne Art wie auch um ein Gemisch aus verschiedenen Arten derartiger Organosiliciumverbindungen handeln.

Beispiele für Reste $R^3$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Hexadecylreste, wie der n-Hexadecylrest, Cycloalkylreste, wie Cyclopentyl-, Cyclohexyl-, Cycloheptylreste und Methylcyclohexylreste, Alkenylreste, wie Allyl-, 5-Hexenyl- und Cyclohexenylethylrest, sauerstoffhaltige Reste, wie 2-Ethoxyethyl-, 3,6-Dioxaoctyl-, 3,6,9-Trioxadecyl-, 2-Acetoxyethyl- und 2-(2-Acetoxyethyloxy)ethylrest, sowie siliciumhaltige Reste, wie der 3-Triethylsilylpropyl- und der 4-Trimethylsiloxybutylrest.

Bevorzugt handelt es sich bei Rest $R^3$ um Methyl-, Ethyl-, n-Butyl-, n-Octyl-, 2-Ethylhexyl-, Decyl- und Dodecylreste, wobei der Ethyl-, n-Butyl- und 2-Ethylhexylrest besonders bevorzugt sind.

Beispiele für $R^4$ gleich gegebenenfalls substitierter Alkylrest sind Methyl-, Ethyl-, Butyl- und Trichlormethylrest.

Bevorzugt handelt es sich bei Rest $R^4$ um Wasserstoffatom und Chloratom.

Bevorzugt handelt es sich bei Verbindung (B) um Dimethylmaleinat, Diethylmaleinat, Diallylmaleinat, Dibutylfumarat, Dioctylmaleinat, Monooctylmaleinat, Dibutylmaleinat und Bis(2-ethylhexyl)maleinat.

Bei der erfindungsgemäß eingesetzten Verbindung (B) kann es sich um eine einzelne Art wie auch um Gemisch aus verschiedenen Arten derartiger Verbindungen handeln.

Die erfindungsgemäßen Massen können die Organosiliciumverbindungen (A) sowie die Verbindungen (B) in einem in weiten Bereichen schwankenden Verhältnis enthalten, wobei sich dieses an der Stöchiometrie dieser Verbindungen orientiert. So liegt das zahlenmäßige Verhältnis von $R^{2-}$CH=CH-O-Gruppen der Verbindung (A) zu -$CR^4$=$CR^{4-}$Gruppen in Verbindung (B) bevorzugt im Bereich 0,2 bis 5,0, besonders bevorzugt von 0,7 bis 1,8, insbesondere von 1,0 bis 1,2.

Die erfindungsgemäßen Zusammensetzungen können nun unter dem Einfluß energiereicher Strahlung vernetzt werden. Viele Strahlungsarten sind hierbei geeignet, wie etwa Elektronenstrahlen, c-Strahlen, Röntgen-Strahlen, UV-Licht, wie z.B. solches mit Wellenlängen im Bereich von 200 bis 400 nm, und sichtbares Licht, wie z.B. solches mit einer Wellenlänge von 400 bis 600 nm, also sogenanntes "Halogenlicht". Ultraviolettlicht kann z.B. in Xenon-, Quecksilbernieder-, Quecksilbermittel- oder Quecksilberhochdrucklampen erzeugt werden.

Ein weiterer Gegenstand der vorliegenden Erfindung ist ein Verfahren zur Vernetzung der erfindungsgemäßen Alkenylethersiloxanmassen durch Bestrahlung mit energiereicher Strahlung.

Vorzugsweise handelt es sich bei der energiereichen Strahlung, durch welche die erfindungsgemäßen Massen vernetzt werden, um UV-Licht im Bereich von 200-400 nm und um Elektronenstrahlen.

Die erfindungsgemäßen Zusammensetzungen können auch ohne Zufuhr von energiereicher Strahlung rein thermisch vernetzen, weshalb sie auch nur begrenzte Haltbarkeit unter Ausschluß dieser Strahlung haben. Diese sogenannte Topfzeit beträgt aber ein Vielfaches der Vernetzungszeit unter Einfluß von energiereicher Strahlung, weshalb eine rein thermische Härtung zwar möglich, aber nicht bevorzugt ist.

Die erfindungsgemäßen Alkenylethersiloxanmassen enthalten dabei vorzugsweise Radikale bildende Initiatoren

(C). Obwohl eine geeignete Kombination von Komponente (A) mit Komponente (B) auch ohne den optionellen Bestandteil (C) gehärtet werden kann, wie z.B. durch Elektronenstrahl, resultiert ein Zusatz von Radikalinitiatoren, die eingestrahlte Energie absorbieren und daraufhin in Radikale zerfallen, in einer Erhöhung der Vernetzungsgeschwindigkeit.

Beispiele für gegebenenfalls eingesetzte Initiatoren (C) sind Benzoinether, wie Benzoin-n-butylether, Benzilketale, wie Benzildimethylketal, α,α-Dialkoxyacetophenone, wie α,α-Diethoxyacetophenon, α-Hydroxyalkylphenone, wie 1-Hydroxycyclohexylphenylketon und 2-Hydroxy-2-methyl-1-phenylpropan-1-on, α-Aminoalkylphenone, wie 2-Methyl-1-[4-(methylthio)phenyl]-2-morpholinopropan-1-on, Acylphosphinoxide, wie 2,4,6-Trimethylbenzoyl-diphenylphosphinoxid und Bisacylphosphinoxide, wie Bis(2,6-dimethoxybenzoyl)-isooctylphosphinoxid.

Als Initiator (C) sind Ketone, wie Benzophenon, 1-Chlor-4-propoxythioxanthon, Isopropylthioxanthon und Thioxanthon, ebenfalls wirksam, besser jedoch in Kombination mit Aminoinitiatoren, wie Triethanolamin oder 2-n-Butoxyethyl-4-(dimethylamino)benzoat.

Bei den erfindungsgemäß gegebenenfalls eingesetzten Initiatoren (C) kann es sich um eine einzelne Art wie auch um ein Gemisch aus verschiedenen Arten derartiger Initiatoren handeln.

Vorzugsweise werden Initiatoren (C) in Mengen von 0,5 bis 5 Gew.-%, besonders bevorzugt 1 bis 3 Gew.-%, jeweils bezogen auf das Gesamtgewicht von (A) und (B), eingesetzt.

Aus Gründen der besseren Handhabung ist es bevorzugt, ein Gemisch aus (A) + (B) oder (A) + (B) + (C) mit geringen Mengen einer inhibierenden Komponente (D) zu versetzen, um beispielsweise vorzeitige Vernetzung einer verwendungsfähigen Formulierung während deren Lagerung zu verhindern. Aufgabe dieser Stoffe ist es im allgemeinen, entstehende Radikale unwirksam zu machen und damit den Beginn einer radikalischen Polymerisation von Gruppen der Struktur $R^2$-CH=CH-O- mit Molekülen der Komponente (B) zu verzögern oder zu verhindern.

Werden durch Bestrahlung oder erhebliche Erwärmung große Mengen an Radikalen freigesetzt, führt dies zu einem raschen Verbrauch der Inhibitormoleküle (D), und eine Aushärtung der erfindungsgemäßen Masse setzt sehr plötzlich ein.

Beispiele für gegebenenfalls eingesetzte Inhibitoren (D) sind alle gebräuchlichen, auch bisher in radikalisch ablaufenden Prozessen eingesetzten Inhibitoren, wie Hydrochinon, 4-Methoxyphenol, 2,6-Ditert.butyl-4-methylphenol oder Phenothiazin.

Bei dem erfindungsgemäß gegebenenfalls eingesetzten Inhibitor (D) kann es sich um eine einzelne Art wie auch um ein Gemisch aus verschiedenen Arten derartiger Inhibitoren handeln.

Vorzugsweise werden Inhibitoren (D) in Mengen von 10 bis 10 000 ppm, besonders bevorzugt 50 bis 400 ppm, jeweils bezogen auf das Gesamtgewicht der erfindungsgemäßen Alkenylethersiloxanmasse, eingesetzt.

Die Strahlungsvernetzung erfolgt vorzugsweise bei einer Temperatur von 0 bis 100°C, besonders bevorzugt 20 bis 60 °C, und dem Druck der umgebenden Atmosphäre, d.h. 900 bis 1100 hPa.

Des weiteren ist es möglich, jedoch nicht bevorzugt, die erfindungsgemäßen Alkenylethersiloxanmassen ausschließlich thermisch zu härten, wobei dann der Zusatz von Radikale bildenden Peroxiden oder Azoverbindungen (E) bevorzugt ist.

Beispiele für gegebenenfalls zugesetzte Komponente (E) sind Lauroylperoxid, Benzoylperoxid, 2,4-Dichlorbenzoylperoxid und Azoisobutyronitril.

Die thermische Vernetzung erfolgt vorzugsweise bei einer Temperatur von 50 bis 200°C, besonders bevorzugt von 70 bis 150 °C, und dem Druck der umgebenden Atmosphäre, d.h. 900 bis 1100 hPa.

Des weiteren können die erfindungsgemäßen Massen noch Zusatzstoffe, wie z.B. Füllstoffe, Pigmente und Haftvermittler, wie Silane oder Epoxidverbindungen, enthalten.

Die erfindungsgemäßen Alkenylethersiloxanmassen haben den Vorteil, daß Komponente (A) mit der monomeren Komponente (B) ausgezeichnet verträglich ist und daher klare Mischungen ohne Phasenseparation erhalten werden. Da es sich bei Komponente (B) ausschließlich um monomere Verbindungen handelt, ergibt sich der erhebliche Vorteil, daß erfindungsgemäße Massen mit einer Viskosität von 10 bis 100 $mm^2/s$ bei 25°C erhältlich sind. Des weiteren haben die erfindungsgemäßen Massen den Vorteil, daß sie auf einfache Weise und sehr leicht zu festen Überzügen oder Formkörpern vernetzen.

Die erfindungsgemäßen Massen können überall dort eingesetzt werden, wo auch bisher vernetzbare Massen auf der Basis von Alkenylethersiloxane eingesetzt wurden.

Beispielsweise eignen sich die erfindungsgemäßen Massen hervorragend zur Herstellung von festen Überzügen oder Formkörpern.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Alkenylethersiloxanmassen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravurüberzugsvorrichtung, Messer- oder Rakelbeschichtung.

Insbesondere eignen sich die erfindungsgemäßen Massen zur Verwendung in strahlungshärtenden Druckfarben.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

**Beispiel 1**

277 g Diethylenglycoldivinylether verdünnt mit 43 g n-Butylacetat werden gemäß dem in der eingangs zitierten WO 93/22368 beschriebenen Verfahren mit insgesamt 111 g eines kurzkettigen Equilibrats aus Hydrogenmethylsiloxy- und Trimethylsiloxyeinheiten in Anwesenheit von 5 mg Platin in Form eines Platin-1,3-divinyl-1,1,3,3-tetramethyldisiloxan-Komplexes reagieren gelassen. Das eingesetzte Wasserstoffsiloxanequilibrat hat eine Viskosität von 1,4 $mm^2/s$ und einen Gehalt an aktivem Wasserstoff von 0,90 %. Die Aufarbeitung erfolgt bei 140°C und 3 hPa und liefert 236 g eines Vinylether-Siloxan-Copolymers mit 96 $mm^2/s$ und einem Vinyloxyequivalentgewicht von 384 g/Mol C=C-O.
5,0 g des so erhaltenen Vinylether-Siloxan-Copolymers werden mit 1,9 g Maleinsäuredimethylester, 0,7 mg 2,6-Ditert.butyl-4-methylphenol und 0,2 g 2-Hydroxy-2-methyl-1-phenylpropan-1-on vermischt. Die Mischung ist homogen und hat eine Viskosität von ca. 60 $mm^2/s$. Unter UV-Licht einer Hg-Mitteldrucklampe (240-700 nm) ist eine 100 µ-Beschichtung auf Aluminiumfolie nach Einwirkung von 0,15 $J/cm^2$ durchgehärtet.

**Beispiel 2**

Gemäß dem in der eingangs zitierten WO 93/22368 beschriebenen Verfahren werden 800 g eines Equilibrats aus Hydrogenmethylsiloxy-, Hydrogendimethylsiloxy- und Dimethylsiloxyeinheiten mit einem Aktivwasserstoffgehalt von 0,089 % und einem durchschnittlichen Molekulargewicht von ca. 3000 mit 178 g 1,4-Butandioldivinylether unter Einwirkung von Tris(triphenylphosphin)rhodiumchlorid, dem sogenannten Wilkinson-Katalysator (entsprechend 4 ppm Rh, bezogen auf das Gesamtgewicht der Reaktionsmasse) in einer Hydrosilylierungsreaktion abreagiert. Nach vollständigem Umsatz wird überschüssiger Divinylether bei 120°C und 3 hPa entfernt, worauf man ein Vinylether-Siloxan-Copolymer mit einer Viskosität von 350 $mm^2/s$, 91 Gew.-% Silicongehalt (berechnet als Summe aller Methylsiloxyeinheiten bezogen auf Copolymer) und einem Gehalt an Vinyloxygruppen von 2,4 Gew.-% erhält.

9,0 g (5 mmol $H_2C=CH-O$) des so erhaltenen Vinylether-Siloxan-Copolymers werden mit 1,2 g Maleinsäuredibutylester, 1 mg 2,6-Ditert.butyl-4-methylphenol und 0,3 g 2-Hydroxy-2-methyl-1-phenylpropan-1-on vermischt. Die Mischung ist homogen und hat eine Viskosität von ca. 300 $mm^2/s$. Unter UV-Licht einer Hg-Mitteldrucklampe (240-700 nm) ist eine 100 µ-Beschichtung auf Aluminiumfolie nach Einwirkung von 0,2 $J/cm^2$ durchgehärtet.

**Patentansprüche**

**1.** Alkenylethersiloxanmassen enthaltend

(A) oligomere oder polymere Organosiliciumverbindung mit durchschnittlich mehr als einer Alkenyloxygruppe der Formel

$$R^2\text{-CH=CH-O-} \qquad (VI),$$

wobei $R^2$ Wasserstoffatom oder Methylrest bedeutet,
(B) monomere Malein- und/oder Fumarsäureverbindung der Formel

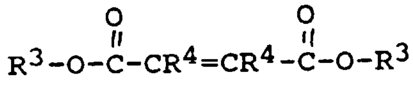

(VII),

oder

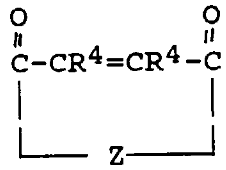

(VIII),

wobei

- $R^3$ gleich oder verschieden sein kann und Wasserstoffatom, Kohlenwasserstoffrest mit 1 bis 16 Kohlenstoffatomen, der durch Sauerstoff, Schwefel, sauer-stoff- oder siliciumhaltige Einheiten unterbrochen sein kann, substituierter Kohlenwasserstoffrest mit 1 bis 6 Kohlenstoffatomen, Silylrest oder Siloxanylrest bedeutet,
- $R^4$ gleich oder verschieden sein kann und Wasserstoffatom, Chlor, Brom, Fluor oder gegebenenfalls substituierter Alkylrest bedeutet und
- Z gleich Sauerstoffatom oder ein Rest $-NR^5-$ mit $R^5$ gleich einer für $R^3$ angegebenen Bedeutung ist,

gegebenenfalls
(C) Radikale bildende Initiatoren und gegebenenfalls
(D) Inhibitoren zur Regelung der Topfzeit.

**2.** Alkenylethersiloxanmassen gemäß Anspruch 1, dadurch gekennzeichnet, daß es sich bei Organosiliciumverbindungen (A) um durchschnittlich mehr als eine Vinyloxygruppe aufweisende Siloxancopolymere handelt enthaltend

(a) Siloxaneinheiten der Formel

$$R_aSi(OR^1)_bO_{\frac{4-a-b}{2}} \quad (I),$$

wobei

- R gleiche oder verschiedene, gegebenfalls halogenierte Kohlenwasserstoffreste mit 1 bis 18 Kohlenstoffatomen je Rest bedeutet,
- $R^1$ gleiche oder verschiedene Alkylreste mit 1 bis 4 Kohlenstoffatomen je Rest, die durch ein Ethersauerstoffatom substituiert sein können, bedeutet,
- a 0, 1, 2 oder 3,
- b 0, 1, 2 oder 3

und die Summe a+b nicht größer als 3 ist,

(b) je Molekül mindestens zwei Einheiten ausgewählt aus der Gruppe von Einheiten der Formeln

$$GR_cSiO_{\frac{4-(c+1)}{2}} \quad (II),$$

$$O_{\frac{4-(c+1)}{2}}\,R_cSi\text{-}G^1\text{-}SiR_cO_{\frac{4-(c+1)}{2}} \quad (III),$$

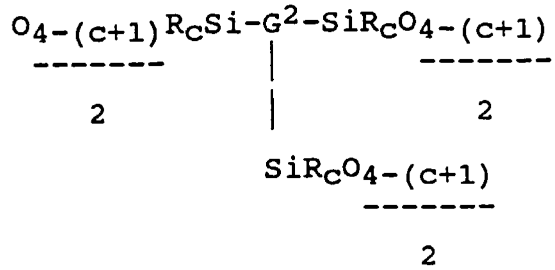 (IV),

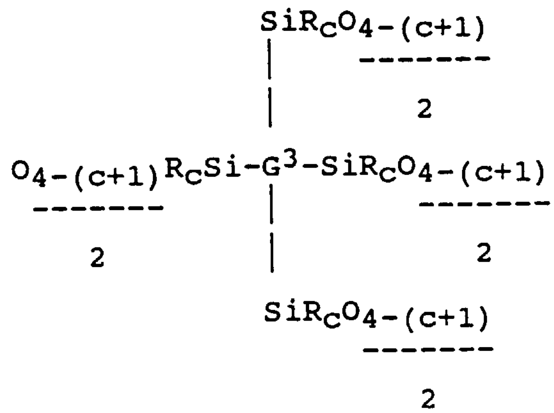 (V),

wobei

R die oben dafür angegebene Bedeutung hat,
c 0, 1 oder 2 ist,
G einen Rest der Formel

$$- CH_2CH_2OY(OCH{=}CH_2)_{x-1}$$

bedeutet, wobei

Y einen zweiwertigen, dreiwertigen, vierwertigen, fünfwertigen oder sechswertigen Kohlenwasserstoffrest mit 2 bis 20 Kohlenstoffatomen je Rest bedeutet, der durch Gruppen der Formel

- OH,
- $OR^2$ (wobei $R^2$ einen Alkylrest mit 1 bis 6 Kohlenstoffatomen je Rest bedeutet),
- $OSiR^3{}_3$ (wobei $R^3$ einen Methyl-, Ethyl-, Isopropyl-, tert.-Butyl- oder Phenylrest bedeutet),
- 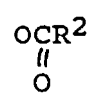

  (wobei $R^2$ die oben dafür angegebene Bedeutung hat) oder
- X (wobei X ein Halogenatom bedeutet)

substituiert sein kann
oder durch mindestens ein Sauerstoffatom, eine Carboxyl- oder eine Carbonylgruppe unterbrochen sein kann, und

x 2, 3, 4, 5 oder 6 ist,

$G^1$ einen Rest der Formel

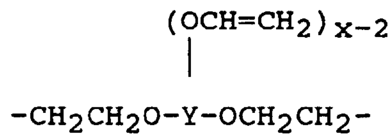 ,

$G^2$ einen Rest der Formel

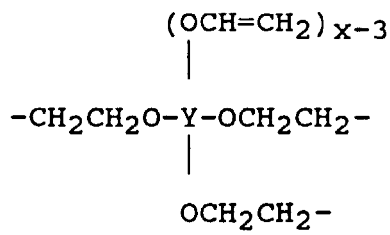

und

$G^3$ einen Rest der Formel

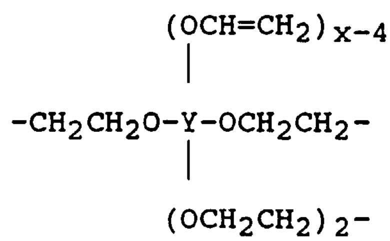

und

bedeutet, wobei Y und x die oben dafür angegebene Bedeutung haben.

**3.** Alkenylethersiloxanmassen gemäß Anspruch 1 oder 2, dadurch gekennzeichnet, daß die Viskosität der eingesetzten Organosiliciumverbindung (A) 10 bis 50 000 $mm^2/s$ bei 25°C beträgt.

**4.** Alkenylethersiloxanmassen gemäß einem oder mehreren der Ansprüche 1 bis 3, dadurch gekennzeichnet, daß die Anzahl der Reste der Formel (VI) pro kg eingesetzter Organosiliciumverbindung (A) 0,1 bis 3 Molequivalent beträgt.

**5.** Alkenylethersiloxanmassen gemäß einem oder mehreren der Ansprüche 1 bis 4, dadurch gekennzeichnet, daß es sich bei Verbindung (B) um solche, ausgewählt aus der Gruppe bestehend aus Dimethylmaleinat, Diethylmaleinat, Diallylmaleinat, Dibutylfumarat, Dibutylmaleinat, Bis(2-ethylhexyl)-maleinat, Dioctylmaleinat und Monooctylmaleinat, handelt.

**6.** Alkenylethersiloxanmassen gemäß einem oder mehreren der Ansprüche 1 bis 5, dadurch gekennzeichnet, daß sie

(C) Radikale bildende Initiatoren

enthalten.

**7.** Alkenylethersiloxanmassen gemäß einem oder mehreren der Ansprüche 1 bis 5, dadurch gekennzeichnet, daß sie

(C) Radikale bildende Initiatoren und
(D) Inhibitoren zur Regelung der Topfzeit

enthalten.

**8.** Verfahren zur Vernetzung der Alkenylethersiloxanmassen gemäß einem oder mehreren der Ansprüche 1 bis 7 durch Bestrahlung mit energiereicher Strahlung.

## Claims

**1.** Alkenyl ether-siloxane compositions comprising

(A) an oligomeric or polymeric organosilicon compound having on average more than one alkenyloxy group of the formula

$$R^2\text{-CH=CH-O-} \qquad (VI)$$

in which $R^2$ is a hydrogen atom or a methyl radical,
(B) a monomeric maleic and/or fumaric acid compound of the formula

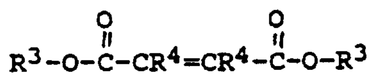

(VII),

or

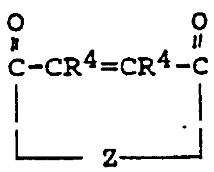

(VIII),

in which

- $R^3$ can be identical or different and is a hydrogen atom, a hydrocarbon radical having 1 to 16 carbon atoms, which can be interrupted by oxygen, sulphur or oxygen- or silicon-containing units, a substituted hydrocarbon radical having 1 to 6 carbon atoms, a silyl radical or a siloxanyl radical,
- $R^4$ can be identical or different and is a hydrogen atom, chlorine, bromine, fluorine or an optionally substituted alkyl radical and
- Z is an oxygen atom or a radical $-NR^5-$, where $R^5$ has one of the meanings given for $R^3$,

if appropriate
(C) initiators which form free radicals and
if appropriate
(D) inhibitors for regulating the pot life.

**2.** Alkenyl ether-siloxane compositions according to Claim 1, characterized in that the organosilicon compounds (A) are siloxane copolymers which contain on average more than one vinyloxy group and comprise

(a) siloxane units of the formula

$$R_aSi(OR^1)_bO_{\frac{4-a-b}{2}} \qquad (I),$$

in which

- R is identical or different, optionally halogenated hydrocarbon radicals having 1 to 18 carbon atoms per radical,
- $R^1$ is identical or different alkyl radicals having 1 to 4 carbon atoms per radical, which can be substituted by an ether oxygen atom,
- a is 0, 1, 2 or 3,
- b is 0, 1, 2 or 3

and the sum a+b is not greater than 3,

(b) at least two units per molecule chosen from the group consisting of units of the formulae

$$GR_cSiO_{\frac{4-(c+1)}{2}} \qquad (II),$$

$$O_{\frac{4-(c+1)}{2}}\,R_cSi\text{-}G^1\text{-}SiR_cO_{\frac{4-(c+1)}{2}} \qquad (III),$$

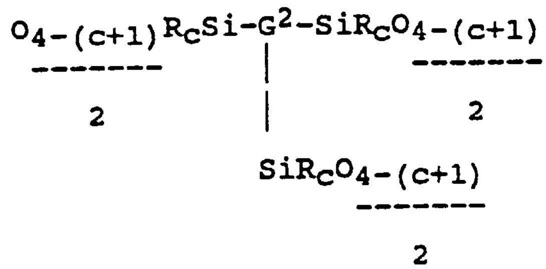

(IV),

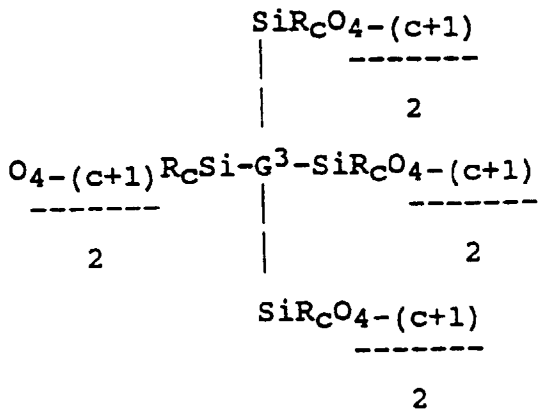

(V),

in which

R has the meaning given above for this radical,
c is 0, 1 or 2,
G is a radical of the formula

$$-CH_2CH_2OY(OCH=CH_2)_{x-1}$$

in which

Y is a divalent, trivalent, tetravalent, pentavalent or hexavalent hydrocarbon radical having 2 to 20 carbon atoms per radical, which can be substituted by groups of the formula

- OH,
- $OR^2$ (in which $R^2$ is an alkyl radical having 1 to 6 carbon atoms per radical),
- $OSiR^3_3$ (in which $R^3$ is a methyl, ethyl, isopropyl, tert-butyl or phenyl radical),
- 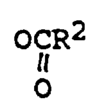

  (in which $R^2$ has the meaning given above for this radical) or
- X (in which X is a halogen atom)

or can be interrupted by at least one oxygen atom or one carboxyl or one carbonyl group, and
x is 2, 3, 4, 5 or 6,

$G^1$ is a radical of the formula

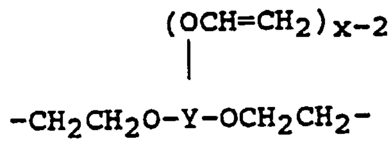 ,

$G^2$ is a radical of the formula

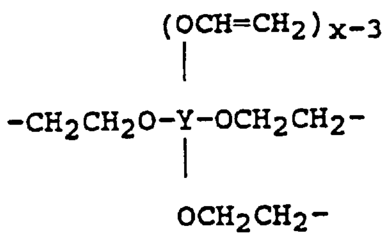

and

$G^3$ is a radical of the formula

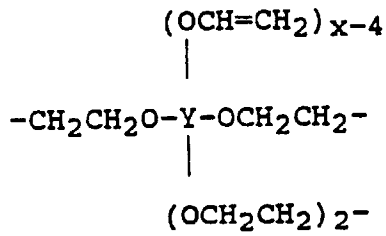

and

in which Y and x have the meaning given above for these symbols.

**3.** Alkenyl ether-siloxane compositions according to Claim 1 or 2, characterized in that the viscosity of the organosilicon compound (A) employed is 10 to 50 000 $mm^2/s$ at 25°C.

**4.** Alkenyl ether-siloxane compositions according to one or more of Claims 1 to 3, characterized in that the number of radicals of the formula (VI) per kg of organosilicon compound (A) employed is 0.1 to 3 molar equivalents.

**5.** Alkenyl ether-siloxane compositions according to one or more of Claims 1 to 4, characterized in that compound (B) is one chosen from the group consisting of dimethyl maleate, diethyl maleate, diallyl maleate, dibutyl fumarate, dibutyl maleate, bis(2-ethylhexyl) maleate, dioctyl maleate and monooctyl maleate.

**6.** Alkenyl ether-siloxane compositions according to one or more of Claims 1 to 5, characterized in that they comprise (C) initiators which form free radicals.

**7.** Alkenyl ether-siloxane compositions according to one or more of Claims 1 to 5, characterized in that they comprise

(C) initiators which form free radicals and
(D) inhibitors for regulating the pot life.

**8.** Process for crosslinking the alkenyl ether-siloxane compositions according to one or more of Claims 1 to 7 by irradiation with high-energy radiation.

**Revendications**

**1.** Compositions d'alcényléthersiloxane contenant

(A) un composé organosilicié oligomère ou polymère avec en moyenne, plus d'un groupe alcényloxy de formule

$$R^2\text{-CH=CH-O-} \qquad \text{(VI)}$$

où $R^2$ représente un atome d'hydrogène ou un radical méthyle,
(B) un composé monomère de l'acide maléique et/ou fumarique de formule

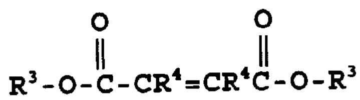

(VII)

ou

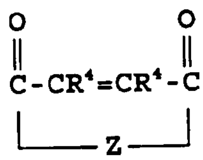

(VIII)

où

$R^3$ peut être identique ou différent et représente un atome d'hydrogène, un radical hydrocarbure avec 1 à 16 atomes de carbone, qui peut être interrompu par un oxygène, un soufre, des unités contenant de l'oxygène ou du silicium, un radical hydrocarbure substitué avec 1 à 6 atomes de carbone, un radical silyle ou un radical siloxanyle,
$R^4$ peut être identique ou différent et représente un atome d'hydrogène, du chlore, du brome, du fluor ou un radical alcoyle facultativement substitué, et
Z est un atome d'oxygène ou un radical $-NR^5-$ avec $R^5$ égal à une signification donnée pour $R^3$, facultativement,

(C) des initiateurs formant des radicaux et,
facultativement,
(D) des inhibiteurs pour régler la durée admissible de stockage.

**2.** Compositions d'alcényléthersiloxane suivant la revendication 1, caractérisées en ce que le composé organosilicié (A) consiste en un copolymère de siloxane présentant, en moyenne, plus d'un groupe vinyloxy, contenant

(a) des unités siloxane de formule

$$R_aSi(OR^1)_bO_{(4-a-b)/2} \qquad \text{(I)}$$

où

R représente des radicaux hydrocarbure identiques ou différents, facultativement halogénés, avec 1 à 18 atomes de carbone par radical,
$R^1$ représente des radicaux alcoyle identiques ou différents avec 1 à 4 atomes de carbone par radical, qui peuvent être substitués par un atome d'oxygène d'éther,
a est 0, 1, 2 ou 3,
b est 0, 1, 2 ou 3, et
la somme a+b n'est pas supérieure à 3,

(b) par molécule, au moins deux unités choisies dans le groupe des unités de formules

$$GR_cSiO_{4-(c+1)/2} \qquad \text{(II)}$$

$$O_{4-(c+1)/2}R_cSi\text{-}G^1\text{-}SiR_cO_{4-(c+1)/2} \qquad \text{(III)}$$

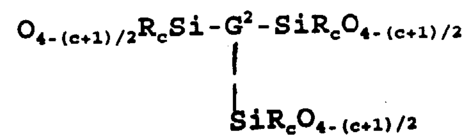 (IV)

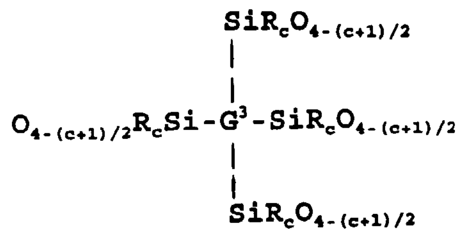 (V)

où

R a la signification donnée ci-dessus,
c est 0, 1 ou 2,
G représente un radical de formule

$$-CH_2CH_2OY(OCH=CH_2)_{x-1}$$

où

Y représente un radical hydrocarbure bivalent, trivalent, tétravalent, pentavalent ou hexavalent, avec 2 à 20 atomes de carbone par radical, qui peut être substitué par les groupes de formule

- OH,
- $OR^2$ (où $R^2$ représente un radical alcoyle avec 1 à 6 atomes de carbone par radical),
- $OSiR^3{}_3$ (où $R^3$ représente un radical méthyle, éthyle, isopropyle, t-butyle ou phényle),
- 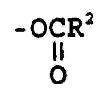

  (où $R^2$ a la signification donnée ci-dessus),
  ou
- X (où X représente un atome d'halogène),
  ou peut être interrompu par au moins un atome d'oxygène, un groupe carboxyle ou carbonyle, et

x est 2, 3, 4, 5 ou 6,

$G^1$ représente un radical de formule

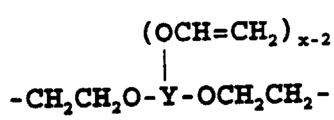

$G^2$ représente un radical de formule

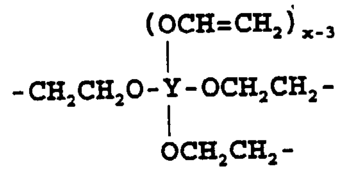

et
$G^3$ représente un radical de formule

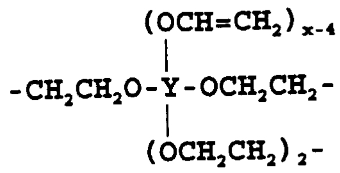

et

où Y et x ont la signification donnée précédemment.

**3.** Compositions d'alcényléthersiloxane suivant la revendication 1 ou 2, caractérisées en ce que la viscosité du composé organosilicié (A) introduit atteint 10 à 50 000 $mm^2/s$ à 25°C.

**4.** Compositions d'alcényléthersiloxane suivant l'une ou plusieurs des revendications 1 à 3, caractérisées en ce que le nombre de radicaux de formule (VI) par kg de composé organosilicié (A) introduit atteint 0,1 à 3 équivalents en moles.

**5.** Compositions d'alcényléthersiloxane suivant l'une ou plusieurs des revendications 1 à 4, caractérisées en ce que le composé (B) consiste en ceux choisis parmi le groupe consistant en le maléate de diméthyle, le maléate de diéthyle, le maléate de diallyle, le fumarate de dibutyle, le maléate de dibutyle, le maléate de bis(2-éthylhexyle), le maléate de dioctyle et le maléate de monooctyle.

**6.** Compositions d'alcényléthersiloxane suivant l'une ou plusieurs des revendications 1 à 5, caractérisées en ce qu'elles contiennent des initiateurs formant des radicaux (C).

**7.** Compositions d'alcényléthersiloxane suivant l'une ou plusieurs des revendications 1 à 5, caractérisées en ce qu'elles contiennent les initiateurs formant des radicaux (C) et des inhibiteurs pour régler la durée admissible de stockage (D).

**8.** Procédé de réticulation des compositions d'alcényléthersiloxane suivant l'une ou plusieurs des revendications 1 à 7, par exposition à un rayonnement riche en énergie.